Europäisches Patentamt

European Patent Office

Office européen des brevets

(19)

(11) **EP 1 460 397 A2**

(12) **EUROPÄISCHE PATENTANMELDUNG**

(43) Veröffentlichungstag:
22.09.2004 Patentblatt 2004/39

(51) Int Cl.7: **G01H 3/00**

(21) Anmeldenummer: 04006209.3

(22) Anmeldetag: **16.03.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL LT LV MK**

(30) Priorität: **18.03.2003 DE 10311922**

(71) Anmelder: **FAIST Automotive GmbH & Co. KG
86381 Krumbach (DE)**

(72) Erfinder:
• **Patsouras, Christine
64646 Heppenheim (DE)**

• **Patsouras, Dimitrios
64646 Heppenheim (DE)**
• **Fastl, Hugo
81476 München (DE)**
• **Pfaffelhuber, Klaus
89312 Günzburg (DE)**

(74) Vertreter: **Müller, Hans-Jürgen, Dipl.-Ing.
Müller, Schupfner & Gauger,
Maximilianstrasse 6
80539 München (DE)**

(54) **Einrichtung und Verfahren zur Ermittlung der Geräuschqualität von Dieselmotoren oder Dieselfahrzeugen**

(57) Die Ermittlung der Geräuschqualität von Dieselmotoren oder Dieselfahrzeugen erfolgt durch Ermittlung der Schall- bzw. Geräuschemissionen mittels einer Schallempfangseinrichtung (1), durch nachfolgende Auswertung der Ausgangssignale der Schallempfangseinrichtung (1) mit Berechnungseinheiten (6, 5) für die Dieselhaftigkeit (D) und die Lautheit (N) und durch Auswertung mittels einer Auswerteeinrichtung (7), insbesondere unter Einbeziehung des Crestfaktors (C) und der Standardabweichungen (S) der Häufigkeitsverteilung der Impulshöhen für das Dieselgeräusch in der Berechnungseinrichtung (6) für die Dieselhaftigkeit (D).

Fig. 1

EP 1 460 397 A2

**Beschreibung**

Die Erfindung bezieht sich auf eine Einrichtung und ein Verfahren zur Ermittlung der Geräuschqualität (GQ) von Dieselmotoren oder Dieselfahrzeugen der in den Oberbegriffen der Ansprüche 1 und 7 genannten Gattung.

Obwohl Dieselmotoren in der Regel ökonomischer arbeiten und weniger störanfällig sind als Benzinmotoren, wird die für Dieselmotoren charakteristische Geräuscheigenschaft - die "Dieselhaftigkeit" - vielfach als unangenehm und daher umweltunfreundlich empfunden. Die speziellen Dieselgeräusche bzw. die Geräuschqualität von Dieselmotoren hängt von verschiedenen Faktoren, wie der Bauart des Dieselmotors und der Frequenz beim Verbrennungsprozeß, ab. Es ist daher Ziel der Entwicklungstechniker, Dieselmotoren oder Dieselfahrzeuge zu konstruieren, die weniger dieselhaftig auf die Umwelt wirken.

Zur Ermittlung der Dieselhaftigkeit können Größenschätzungen des Geräuschs mit sogenanntem "Ankerschall" durchgeführt werden, wobei der Versuchsperson vor jedem zu beurteilenden Geräusch ein Ankerschall dargeboten und diesem ein fester Wert, z.B. die Größe 100, zugewiesen wird, worauf die Versuchsperson ihre Geräuschempfindung im Vergleich zu diesem festen Wert subjektiv mitteilt, so daß quantitative Zusammenhänge der einzelnen Geräusche als Empfindungsgrößen subjektiv bewertet werden.

Der Erfindung liegt die Aufgabe zugrunde, eine derartige Einrichtung bzw. ein derartiges Verfahren dahingehend zu vereinfachen, daß auf viele Hörversuche durch zahlreiche Testpersonen oder Auswerteeinrichtungen verzichtet werden kann, aber dennoch ein dem Durchschnittshörer entsprechendes Beurteilungsmittel für die Geräuschqualität bzw. Dieselhaftigkeit maschinell zur Verfügung gestellt wird.

Die Erfindung ist in den Patentansprüchen 1 und 7 gekennzeichnet und in Unteransprüchen sind weitere Verbesserungen beansprucht. Im übrigen sind spezielle Ausbildungsformen in der nachfolgenden Beschreibung näher erläutert.

Bei der erfindungsgemäßen Einrichtung weist die Schallsignalauswerteeinrichtung eine Berechnungseinrichtung für die Dieselhaftigkeit D des empfangenen Dieselgeräuschs und eine Berechnungseinrichtung für die Lautheit N auf. Die Ausgangssignale beider Berechnungseinheiten werden in einer Auswerteeinrichtung zur Ermittlung der Geräuschqualität GQ ausgewertet.

Dabei wird die Dieselhaftigkeit D insbesondere durch Auswertung des Crestfaktors C des Schalldruck-Zeitverlaufs und der Verteilung der Impulshöhen der Geräusche ermittelt; es empfiehlt sich, Standardabweichungen (S) der Impulshöhenverteilung mit dem Crestfaktor zu verknüpfen.

Anstelle der Lautheit wird bevorzugt die Perzentil-Lautheit $N_5$ in die Berechnung bzw. Verknüpfung einbezogen.

Unter der Lautheit versteht man eine insbesondere aus der Verdopplung bzw. Halbierung der empfundenen Intensität einer Schallempfindung abgeleitete Meßgröße für die Lautstärke mit der Einheit Sone. Die Lautstärke ist ein Begriff für die Intensität der Schallempfindung in einem Hörereignis mit der Einheit Sone als Meßgröße. Die mit der Lautstärke korrelierende physikalische Größe ist der Effektivwert des Schalldrucks am Ohr, der in der Regel als Schalldruckpegel gemessen wird. Gleichlaut empfundene Töne haben einen gleichen Lautstärkepegel, der in Phon angegeben wird. Für die Berechnung der Lautheit und des Lautstärkepegels aus dem Geräuschspektrum gelten die deutschen Normen DIN 45631. In einem eingeschränkten Bereich von mehr als 40 Phon bzw. mehr als 1 Sone gilt die Relation

$$N = 2^{0,1}\,(L - 40)$$

oder

$$L_N = 40 + 33{,}22\,\lg N,$$

während für Größen unterhalb 40 Phon bzw. unterhalb 1 Sone folgende Beziehung gilt:

$$L_N = 40\,(N + 0{,}0005)^{0,35}.$$

Als Crestfaktor C wird das Verhältnis des Spitzenwerts der zeitlich veränderlichen Größe zu derem Effektivwert verstanden. Bei dem Crestfaktor handelt es sich um das Verhältnis des Spitzenwerts zum Effektivwert des Schalldruck-Zeitverlaufs des Geräuschs. Je größer die Unterschiede zwischen Spitzenwert und Effektivwert ausfallen, desto impulshafter ist ein Geräusch, so daß der Crestfaktor auch als ein Maß für die Impulshaftigkeit eines Geräuschs verwendet werden kann.

Die Perzentil-Lautheit $N_5$ ist ein statistischer Wert des Lautheits-Zeitverlaufs eines Geräuschs und ist definiert durch denjenigen Wert der Lautheit N, welcher in x% der Zeit erreicht oder überschritten wird.

Als weiterer Parameter wird die Regelmäßigkeit der Impulshöhe in Form von Standardabweichungen S der Häufigkeitsverteilung derselben in Betracht gezogen, die innerhalb der Analysedauer von beispielsweise einer Sekunde auftreten.

Insofern ist die Einbeziehung des Crestfaktors C und der Standardabweichungen S der Impulshöhenverteilungen in die Dieselhaftigkeit D wesentlich für die Ermittlung der Geräuschqualität GQ.

Als Anzeigeeinrichtung kann ein Display Anwendungen finden, doch sind auch Drucker und mit diesem zu bedruckendes Material geeignete Hilfsmittel zur Feststellung der Geräuschqualität bzw. Dieselhaftigkeit. Die Konstruktion neuer Dieselmotoren und/oder der Verkleidung derselben im Kraftfahrzeug oder anderen Anlagen kann daher mit Hilfe der Erfindung kostengünstig und schnell bemessen und geprüft werden, ohne daß subjektive Versuchspersonen in diese Geräuschqualitätsermittlung einzuschalten sind.

Die Erfindung wird nun an einem Beispiel erläutert. Dabei zeigen:

Fig. 1 ein Blockschaltbild für das erfindungsgemäße Ausführungsbeispiel und

Fig. 2 eine bevorzugte Relation der in die Geräuschqualitätsermittlung einzubeziehenden Größen und Parameter.

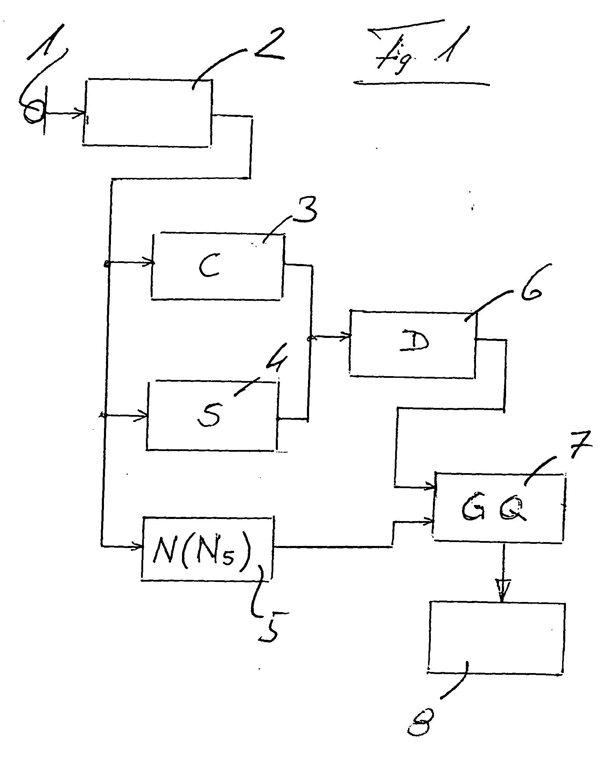

Gemäß Fig. 1 wird das von einem Dieselfahrzeug ausgehende Geräusch in einer als Mikrofon ausgebildeten Schallempfangseinrichtung 1 aufgenommen, deren Ausgangssignal der Schallsignalauswertevorrichtung 2 zugeführt wird. Von dieser gelangen die zeitabhängigen Ausgangsgrößen an die Berechnungseinheit 3 für den Crestfaktor C, die Berechnungseinheit 4 für Standardabweichungen S der Häufigkeitsverteilung der Impulshöhe und an die Berechnungseinrichtung 5 für die Lautheit N bzw. die daraus zu berechnende Perzentil-Lautheit $N_5$. Während die Ausgangsgröße der zuletzt genannten Berechnungseinheit 5 unmittelbar der Auswerteeinrichtung 7 für die Geräuschqualität GQ zugeführt ist, werden die Ausgangssignale der Berechnungseinheit 3 für den Crestfaktor C und der Berechnungseinheit für die Standardabweichung S zuerst einer Berechnungseinheit 6 für die Dieselhaftigkeit D der empfangenen Dieselgeräusche zugeführt, ehe deren Ausgangssignale zur Auswerteeinrichtung 7 gelangt, deren Ausgangssignale zur Anzeigeeinrichtung 8 beispielsweise ein Display oder einen Drucker gelangen.

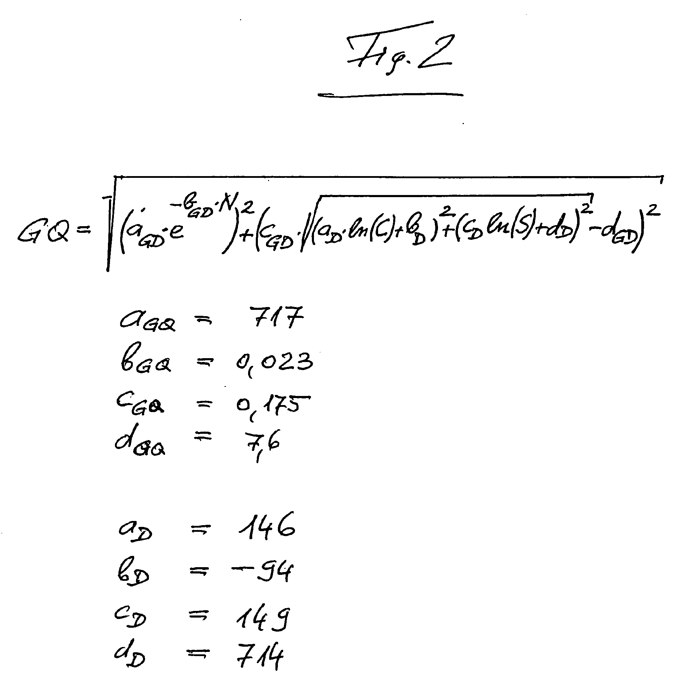

In der Auswerteeinrichtung 7 für die Ausgangssignale der beiden Berechnungseinrichtungen 5, 6 erfolgt eine Verknüpfung gemäß der Wurzel-Formel von Fig. 2 unter Berücksichtigung der optimierten Parameter a, b, c und d. Es hat sich gezeigt, daß bei Anwendung dieser Parameter, also bei weitgehender Berechnung der Geräuschqualität GQ, eine gute Annäherung an die Ermittlung der mittleren Geräuschqualität durch Testpersonen mit ihrem subjektiven Empfinden erreicht werden kann.

Für vier unterschiedliche Dieselmotoren (D H1 bis D H4) und für drei unterschiedliche Motoreinstellungen eines dieselbetriebenen Kraftfahrzeugs (D M1 bis D M3) wurden folgende Perzentil-Lautheiten $N_5$ ermittelt:

Tabelle 1

| Signal | D M1 | D M2 | D M3 | D H1 | D H2 | D H3 | D H4 |
|---|---|---|---|---|---|---|---|
| Perzentillautheit $N_5$/sone | 12,87 | 11,09 | 17,58 | 12,46 | 11,23 | 13,21 | 13,89 |

Für die Crestfaktoren C ergeben sich entsprechend folgende Werte:

Tabelle 2

| Signal | D M1 | D M2 | D M3 | D H1 | D H2 | D H3 | D H4 |
|---|---|---|---|---|---|---|---|
| Crestfaktor | 3,228 | 2,824 | 4,276 | 2,679 | 3,176 | 3,789 | 3,427 |

Entsprechend wurden folgende Standardabweichungen S der Häufigkeitsverteilung der Abstände der Impulsmaxima ermittelt:

Tabelle 3

| Signal | D M1 | D M2 | D M3 | D H1 | D H2 | D H3 | D H4 |
|---|---|---|---|---|---|---|---|
| Standardabweichung | 0,0136 | 0,0107 | 0,0258 | 0,0125 | 0,0080 | 0,0161 | 0,0131 |

Darüber hinaus werden zur Berechnung der subjektiv empfundenen Dieselhaftigkeit physikalische und statistische Parameter aus dem Zeitbereich herangezogen. Dies sind neben dem Crestfaktor C die Standardabweichungen S der Impulshöhenverteilung. Je größer der Crestfaktor und je unregelmäßiger die Verteilung der Schalldruckmaxima, desto größer ist die empfundene "Dieselhaftigkeit". Durch eine Verknüpfung dieser beiden Größen läßt sich der dieselhafte Charakter von Dieselfahrzeugen mit $r_s$ = 0,88 gut nachbilden ($r_s$ ist der Rangkorrelationskoeffizient nach Spearman).

Auch bei einer Abweichung - einem "Toleranzschlauch" - von +/-10 bis 20%, insbesondere von +/- 14% von den in Fig. 2 genannten Parametern ist eine gute Annäherung der berechneten Geräuschqualität an subjektiv empfundenen Größen für die Dieselhaftigkeit gewährleistet.

**Patentansprüche**

1.  Einrichtung zur Ermittlung der Geräuschqualität (GQ) von Dieselmotoren oder Dieselfahrzeugen, mit einer Schallempfangseinrichtung (1), wie einem Mikrofon, einer Schallsignal- bzw. Geräuschauswerteeinrichtung und einer Anzeigeeinrichtung (8) für das Ergebnis der Schallsignal- bzw. Geräuschauswertung,
    **dadurch gekennzeichnet,**
    **daß** die Schallsignalauswerteeinrichtung eine Berechnungseinrichtung (6) für die Dieselhaftigkeit (D) des empfangenen Dieselgeräuschs und eine Berechnungseinrichtung (5) für die Lautheit (N) sowie eine Auswerteeinrichtung (7) für Ausgangssignale der beiden Berechnungseinrichtungen (5, 6) aufweist.

2.  Einrichtung nach Anspruch 1,
    **dadurch gekennzeichnet,**
    **daß** die Berechnungseinrichtung (6) für die Dieselhaftigkeit (D) an eine Berechnungseinrichtung (3) für den Crestfaktor (C) und an eine Berechnungseinrichtung (4) für die Standardabweichungen (S) der Häufigkeitsverteilung der Impulshöhen der Dieselgeräusche angeschlossen ist.

3.  Einrichtung nach Anspruch 1 oder 2,
    **dadurch gekennzeichnet,**
    **daß** eine Berechnungseinheit (5) für die Perzentil-Lautheit ($N_5$) verwendet wird.

4.  Einrichtung nach einem der vorhergehenden Ansprüche,
    **dadurch gekennzeichnet,**
    **daß** die Auswerteeinrichtung (7) für die Ausgangssignale der Berechnungseinrichtung (5, 6) für die Dieselhaftigkeit (D) und für die Lautheit (N, $N_5$) eine Auswertung gemäß folgender Beziehung vornimmt:

$$GQ = \sqrt{\left| a_{GQ} \cdot e^{-b_{GQ} \cdot N} \right|^2 + \left( c_{GQ} \sqrt{\left| a_D \cdot \ln|C| + b_D \right|^2 + \left| c_D \cdot \ln|S| + d_D \right|^2} - d_{GQ} \right)^2}$$

wobei folgende Größen mit Abweichungen bis zum +/- 20% angewendet sind:

$$a_{GQ} = 717$$

$$b_{GQ} = 0,023$$

$$c_{GQ} = 0,175$$

$$d_{GQ} = 7,6$$

$$a_D = 146$$

$$b_D = -94$$

$$c_D = 149$$

$$d_D = 714$$

**5.** Einrichtung nach einem der vorhergehenden Ansprüche,
**dadurch gekennzeichnet,**
**daß** ein Display als Anzeigeeinrichtung (8) verwendet ist.

**6.** Einrichtung nach einem der vorhergehenden Ansprüche,
**dadurch gekennzeichnet,**
**daß** ein Drucker und zu bedruckendes Material als Anzeigeeinrichtung (8) Anwendung finden.

**7.** Verfahren zur Ermittlung der Geräuschqualität (GQ) von Dieselmotoren oder Dieselfahrzeugen, bei dem die Schall- bzw. Geräuschemission ermittelt, ausgewertet und das Ergebnis angezeigt wird,
**dadurch gekennzeichnet,**
**daß** die Lautheit (N) bzw. der Lautstärkepegel (L), der Crestfaktor (C) des Schalldruck-Zeitverlaufs und die Verteilung der Impulshöhen der Geräusche ermittelt und ausgewertet werden.

**8.** Verfahren nach Anspruch 7,
**dadurch gekennzeichnet,**
**daß** physikalische Größen durch Schallempfänger (1) ermittelt und mit statistischen Parametern bzw. Größen derart verknüpft und ausgewertet werden, daß der Crestfaktor (C) mit Standardabweichungen (S) der Impulshöhenverteilung verknüpft wird.

**9.** Verfahren nach Anspruch 7 oder 8,
**dadurch gekennzeichnet,**
**daß** die Perzentil-Lautheit ($N_5$) aus der Lautheit (N) berechnet und mit statistischen Parametern bzw. Größen verknüpft wird.

**10.** Verfahren nach einem der Ansprüche 7 bis 9,
**dadurch gekennzeichnet,**
**daß** weitere Parameter bzw. Größen, wie die Schärfe und/oder der Tonhaltigkeit der Geräusche, in die Auswertung einbezogen werden.

**11.** Verfahren nach einem der Ansprüche 7 bis 10,
**dadurch gekennzeichnet,**
**daß** die Auswertung der ermittelten bzw. berechneten Größen bzw. Parameter gemäß folgender Beziehung vorgenommen wird:

$$GQ = \sqrt{\left| a_{GQ} \cdot e^{-b_{GQ} \cdot N} \right|^2 + \left( c_{GQ} \sqrt{\left| a_D \cdot \ln|C| + b_D \right|^2 + \left| c_D \cdot \ln|S| + d_D \right|^2} - d_{GQ} \right)^2}$$

wobei folgende Größen

$$a_{GQ} = 717$$

$$b_{GQ} = 0,023$$

$$c_{GQ} = 0,175$$

$$d_{GQ} = 7,6$$

$$a_D = 146$$

$$b_D = -94$$

$$c_D = 149$$

$$d_D = 714$$

derart mit möglichen Abweichungen anwendbar sind, daß die resultierende Geräuschqualität nicht mehr als $\pm$ 14% abweicht.

Fig. 1

$$Fig.\ 2$$

$$GQ = \sqrt{\left(a_{GD}' \cdot e^{-b_{GD} \cdot N}\right)^2 + \left(c_{GD} \cdot \sqrt{\left(a_D \cdot \ln(C) + b_D\right)^2 + \left(c_D \ln(S) + d_D\right)^2} - d_{GD}\right)^2}$$

$$a_{GQ} = 717$$
$$b_{GQ} = 0{,}023$$
$$c_{GQ} = 0{,}175$$
$$d_{GQ} = 7{,}6$$

$$a_D = 146$$
$$b_D = -94$$
$$c_D = 149$$
$$d_D = 714$$